# EUROPÄISCHE PATENTANMELDUNG

(11) **EP 2 028 449 A1**
(43) Veröffentlichungstag der Anmeldung: **25.02.2009**
(21) Anmeldenummer: 07016639.2
(22) Anmeldetag: 24.08.2007
(51) Int. Cl.: G01D 5/14, G01P 3/487

(54) **Magnetischer Multipolencoder**

(71) Anmelder: Carl Freudenberg KG, 69469 Weinheim (DE)
(72) Erfinder: Müller, Kristian, 60322 Frankfurt (DE); Gund, Christoph, 69221 Dossenheim (DE); Adler, Mathias, 64646 Heppenheim (DE); Henrich, Uwe, 69502 Hemsbach (DE)

(57) **Zusammenfassung**

Magnetischer Multipolencoder aus einem Trägerring und wenigstens einer auf dem Trägerring aufgebrachten Encoderspur mit abwechselnden Südpolen und Nordpolen, wobei die Encoderspur aus einer Trägermatrix mit darin eingebetteten Bestandteilen aus einem magnetisierbaren Pulver gebildet ist, wobei
- die Trägermatrix aus einem Pulverlack, einem Schmelzkleber, einem Reaktivkleber oder einem Harz besteht.
- Das magnetische Pulver aus Strontium-Ferrit (SrFeO), Neodym-Eisen-Bor (NdFeB) oder Samarium-Cobalt (SmCo) besteht,
- und die Trägermatrix farblich eingefärbt ist.

## Beschreibung

### Technisches Gebiet

Die Erfindung betrifft einen magnetischen Muitipolencoder aus einem Trägerring und wenigstens einer auf dem Trägerring aufgebrachten Encoderspur mit abwechselnden Südpolen und Nordpolen, wobei die Encoderspur aus einer Trägermatrix mit darin eingebetteten bzw. eingemischten Bestandteilen (aus magnetisierbarem Pulver besteht. Möglich ist auch die Beigabe von Alterungsschutzmittel, oder Antioxidanzien. Außerdem wird ein Verfahren zur Herstellung des Multipolencoders beschrieben.

Multipolencoder der gattungsgemäßen Art werden zur Erfassung der Drehzahl oder der Winkellage von rotierenden Maschinenteilen eingesetzt. Die vom Multipolencoder abgegriffenen Signale können zur Motorsteuerung, beispielsweise zur Erzeugung von Einspritz- oder Zündimpulsen herangezogen werden. Diese Art Muitipolencoder haben in der Regel einen Trägerring aus einem metallischen Werkstoff, auf dem eine magnetische Encoderspur befestigt ist. Die Encoderspur ist abwechselnd mit Südpolen und Nordpolen versehen. Diese Südpole bzw. Nordpole wechseln sich ab. Die Encoderspur selbst wird häufig aus einem thermoplastischen Material als Trägermatrix und darin eingebettetem magnetisierbarem Material, vorzugsweise ein Ferritpulver, gebildet.

### Stand der Technik

In der DE 20312 808 U1 ist beispielsweise ein magnetischer Multipolencoder dargestellt, der mit den typischen Bestandteilen versehen ist.

Eine ebenfalls sehr typische Ausbildung eines Multipolencoders zeigt die DE 103 33 486 A1. Dort wird die Encoderspur durch einen magnetischen Kautschukring gebildet, welcher durch Mischen eines Kautschukmaterials mit einem magnetischen Pulver hergestellt ist, wobei das magnetische Pulver ein magnetisches Selten-Erd-Pulver ist. Üblicherweise werden magnetische Ferritpulver verwendet, da der Einsatz von magnetischen Seltene-Erden-Materialien mit hohen Kosten verbunden ist. Die Herstellung des Encoders mit einem Seltenen-Erden-Pulver ist zudem sehr aufwändig, da die Einbringung der Seltenen-Erden-Pulver in den Kautschuk schwierig ist, sowie die weitere Verarbeitung zu einer Ringform und die Befestigung der Ringform am Trägerring durch Kleben oder aufvulkanisieren problematisch ist. In der Schrift DE 103 33 486 A1 wird deshalb auch vorgeschlagen, das Seltene-Erden-Pulver in ein flüssiges Kautschukmaterial einzubringen und dieses auf den Trägerring mittels Beschichten, Sprayen oder Siebdruck anzubringen, um dabei den magnetischen Encoderring herzustellen. Aber auch dieses Verfahren ist aufwändig und führt nicht immer zu den gewünschten Ergebnissen.

### Darstellung der Erfindung

Der Erfindung liegt die Aufgabe zugrunde, einen Multipolencoder zu schaffen, der einfach und kostengünstig hergestellt werden kann. Dabei sollen die Encodereigenschaften nicht beeinträchtigt werden.

Die Lösung der gestellten Aufgabe wird mit den Merkmalen der Ansprüche 1 und 8 erreicht. Die Unteransprüche 2 bis 7, sowie 9 bis 12 stellen vorteilhafte Weiterbildungen des Erfindungsgedankens dar.

### Ausführung der Erfindung

Bei dem neuen Multipolencoder werden die grundsätzlichen Bestandteile des Encoders beibehalten, die Trägermatrix jedoch aus einem sinterfähigen Material, wie einem Pulverlack, einem Schmelzkleber oder Reaktivkleber oder einem Harz, gebildet. Bevorzugt wird als Pulver ein Polyesterharz verwendet. Dieses Polyesterharz kann außerdem mit Farbpulver gefärbt sein und somit als Verdrehschutz und/oder Markenschutz, zur Einbaukontrolle (z.B. alle 80 poligen Encoder blau, alle 96 poligen Encoder rot) dienen. Auch können so farbliche Kundenwünsche erfüllt werden.

Um die gewünschten magnetischen Eigenschaften in der Encoderspur zu erreichen, wird das Mischungsverhältnis von Trägermatrix und magnetisierbarem Material Strontium-Ferrit (SrFeO) oder Neodym-Eisen-Bor (NdFeB) oder Samarium-Cobalt (SmCo) in einem Bereich von 5 bis 30 Gew.-% bzw. 95 bis 70 Gew,-% gewählt. Bevorzugt liegt das Mischungsverhältnis bei 15 Gew.-% Pulverlack zu 85 Gew.-% Magnetpulver. Eine derartige Spur aus magnetischem Material kann in sehr einfacher Weise mit dem Trägerring verbunden werden und dabei gleichzeitig mit hoher Präzision in sehr genauen Abmessungen ausgeführt werden. Günstig ist schließlich auch, wenn die Oberfläche der magnetischen Spur noch plan geschliffen wird. Schließlich ist es möglich, die magnetische Spur mit einem schutzfilm zu überziehen.

Der Schutzfilm kann aus einem sinterfähigen Material, wie einem Pulverlack, einem Schmelzkleber oder Reaktivkleber oder einem Harz bestehen. Bevorzugt wird für den Schutzfilm ein Pulverlack aus Polyesterharz verwendet. Dieses ebenfalls vom Lieferanten gefertigte Polyesterharz kann außerdem mit Farbpulver gefärbt sein und somit als Verdrehschutz und/oder Markenschutz sowie zur Einbaukontrolle (alle 80 poligen Encoder blau, alle 96 poligen Encoder rot) dienen oder an farbliche Kundenwünsche angepasst werden.

Das Verfahren zur Herstellung des Multipolencoders wird so durchgeführt, dass zunächst ein Pulvergemisch aus der Trägermatrix und dem magnetisierbaren Material hergestellt wird, welches auf die Außenfläche des Trägerrings aufgerieselt oder aufgestreut wird. Optional kann der Trägerring vorher auf eine Temperatur in einem Bereich von 150°C - 250°C aufgeheizt werden. Anschließend wird in einer thermischen Nachbehandlung (z.B. Sintern) das Pulvergemisch ausgehärtet. Der Sintervorgang findet entsprechend des verwendeten sinterfähigen Materials bei vorgegebenen hohen Temperaturen statt. Die bevorzugten Temperaturen liegen in einem Bereich von 150°C - 250°C. Bei der Verwendung eines Gemisches aus dem Seltenen-Erden-Pulver Neodym-Eisen-Bor und einem Polyesterharz wird sowohl der Trägerring auf 180°C aufgeheizt, als auch der Sintervorgang bei einer Temperatur von 180°C durchgeführt. Die Dauer des Sintervorgangs ist ebenfalls an das sinterfähige Material angepasst und liegt in einem Bereich von 2-15 min. Bei dem voranstehenden Gemisch aus NdFeB und Polyesterharz beträgt die Dauer des Sintervorgangs 10 min. Hiernach ist die Herstellung des Muitipolencoders abgeschlossen. Zusätzlich ist es möglich, die Oberfläche der Encoderspur noch plan zu schleifen oder auch auf die Oberfläche der Encoderspur einen Schutzfilm aus den oben aufgeführten unmagnetischen Materialien aufzubringen.

Der erfindungsgemäße Encoder hat gegenüber den herkömmlichen Elastomerencodern den Vorteil, dass er in einem breiteren Umfeld eingesetzt werden kann. Er hat eine erhöhte Medien- und Temperaturbeständigkeit. Außerdem ist eine Öl- und auch Salzwasserbeständigkeit gegeben.

Darüber hinaus ist der Dickenaufbau der Encoderschicht weitestgehend unabhängig vom gewählten Trägerring. Es können dadurch größere Toleranzen akzeptiert werden.

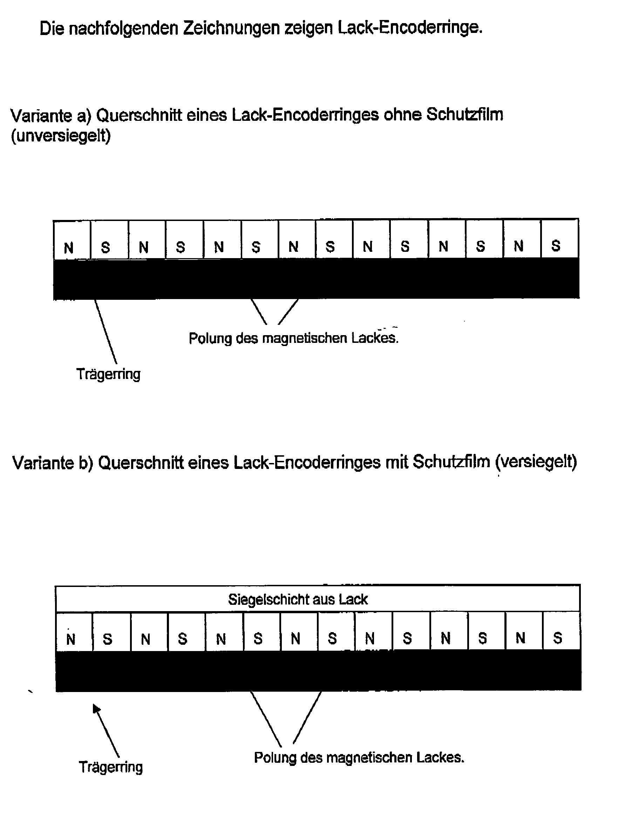

## Patentansprüche

1. Magnetischer Multipolencoder aus einem Trägerring und wenigstens einer auf dem Trägerring aufgebrachten Encoderspur mit abwechselnden Südpolen und Nordpolen, wobei die Encoderspur aus einer Trägermatrix mit darin eingebetteten Bestandteilen aus einem magnetisierbaren Pulver gebildet ist, **dadurch gekennzeichnet, dass**
- die Trägermatrix aus einem Pulverlack, einem Schmelzkleber, einem Reaküvkleber oder einem Harz besteht,
- das magnetisierbare Pulver aus Strontium-Ferrit (SrFeO), Neodym-Eisen-Bor (NdFeB) oder Samarium-Cobalt (SmCo) besteht, und
- und die Trägermatrix ggf. farblich eingefärbt ist.

2. Magnetischer Multipolencoder nach Anspruch 1, **dadurch gekennzeichnet, dass** die Trägermatrix aus einem sinterfähigen Pulverlack, einem Schmelzkleber oder Reaktivkleber und das magnetisierbare Pulver aus Strontium-Ferrit (SrFeO) oder einem Seltene-Erden-Pulver (NdFeB, SmCo) besteht.

3. Magnetischer Multipolencoder nach Anspruch 1**, dadurch gekennzeichnet, dass** die Trägermatrix aus einem pulverförmigen Pulverlack auf Basis eines Polyesterharzes und das magnetisierbare Pulver aus Strontium-Ferrit (SrFeO) oder einem Seltene-Erden-Pulver (NdFeB, SmCo) besteht.

4. Magnetischer Multipolencoder nach Anspruch 3, **dadurch gekennzeichnet, dass** das Polyesterharz in der Verarbeitung aufgeschmolzen wird, optional reagiert und kristallisert.

5. Magnetischer Multipolencoder nach einem der Ansprüche 1 bis 4, **dadurch gekennzeichnet, dass** das Mischungsverhältnis von Trägermatrix und magnetisierbarem Material einen Bereich von 5 bis 30 Gew.-% / 95 bis 70 Gew.-% umfasst, bevorzugt 15 Gew.-% Pulverlack zu 85 Gew.-% NdFeB oder SrFeO oder SmCo beträgt.

6. Magnetischer Multipolencoder nach einem der Ansprüche 1 bis 5 **dadurch gekennzeichnet, dass** die Oberfläche der Encoderspur plan geschliffen ist.

7. Magnetischer Multipolencoder nach einem der Ansprüche 1 bis 6 **dadurch gekennzeichnet, dass** die Encoderspur von einem Schutzfilm überdeckt ist.

8. Verfahren zur Herstellung eines Multipolencoders nach Anspruch 1, **dadurch gekennzeichnet, dass** ein Pulvergemisch aus der Trägermatrix und dem magnetisierbaren Material auf die Außenfläche eines ggf. vorerhitzten Trägerrings aufgerieselt oder aufgestreut und anschließend in einem Trockenvorgang oder Sintervorgang ausgehärtet und im Falle von Harzen einer thermischen Nachbehandlung unterzogen wird, so dass diese entweder reagieren, nach vernetzen oder auskristallisieren.

9. Verfahren nach Anspruch 8, **dadurch gekennzeichnet, dass** der Sintervorgang in einem Temperaturbereich von 150°C - 250°C, bevorzugt bei einer Temperatur von 180°C durchgeführt wird.

10. Verfahren nach einem der Ansprüche 8 oder 9, **dadurch gekennzeichnet, dass** die Oberfläche der Encoderspur plan geschliffen wird.

11. Verfahren nach einem der Ansprüche 8 bis 10, **dadurch gekennzeichnet, dass** auf die Oberfläche der Encoderspur ein Schutzfilm aus einem Pulverlack, einem Schmelzkleber oder Reaktivkleber oder einem Harz aufgebracht wird die Dicke des Schutzfilms kleiner als 0,1 mm beträgt, und dass der Schutzfilm Farbpulver enthält.

12. Magnetischer Multipolencoder nach einem der Ansprüche 1 bis 11, **dadurch gekennzeichnet, dass** die Dicke der magnetischen Schicht in einem Bereich von 0,2 - 1,5 mm liegt.

## Geänderte Patentansprüche

### Geänderte Patentansprüche gemäss Regel 137(2) EPÜ.

**1.** Magnetischer Multipolencoder aus einem Trägerring und wenigstens einer auf dem Trägerring aufgebrachten Encoderspur mit abwechselnden Südpolen und Nordpolen, wobei die Encoderspur aus einer Trägermatrix mit darin eingebetteten Bestandteilen aus einem magnetisierbaren Pulver gebildet ist, **dadurch gekennzeichnet, dass**
- die Trägermatrix aus einem sinterfähigen Material wie einem Pulverlack, einem Schmelzkleber, einem Reaktivkleber oder einem Harz gebildet ist und
- das von der Trägermatrix erfasste magnetisierbare Pulver aus Strontium-Ferrit (SrFeO), Neodym-Eisen-Bor (NdFeB) oder Samarium-Cobalt (SmCo) besteht.

**8.** Verfahren zur Herstellung eines Multipolencoders nach Anspruch 1, **dadurch gekennzeichnet, dass** ein sinterfähiges Pulvergemisch aus der Trägermatrix und dem magnetisierbaren Material auf die Außenfläche eines ggf. vorerhitzten Trägerrings aufgerieselt oder aufgestreut und anschließend in einem Trockenvorgang oder Sintervorgang ausgehärtet und im Falle von Harzen einer thermischen Nachbehandlung unterzogen wird, so dass diese entweder reagieren, nachvernetzen oder auskristallisieren.
